Europäisches Patentamt

European Patent Office

Office européen des brevets

(19)

(11) Veröffentlichungsnummer: **0 102 461**
**B1**

# (12) EUROPÄISCHE PATENTSCHRIFT

(45) Veröffentlichungstag der Patentschrift:
**31.05.89**

(21) Anmeldenummer: **83105848.2**

(22) Anmeldetag: **15.06.83**

(51) Int. Cl.⁴: **F 16 J 15/40**

(54) Sperrflüssigkeitsdichtung.

(30) Priorität: **21.08.82 DE 3231171**

(43) Veröffentlichungstag der Anmeldung:
**14.03.84 Patentblatt 84/11**

(45) Bekanntmachung des Hinweises auf die Patenterteilung:
**31.05.89 Patentblatt 89/22**

(84) Benannte Vertragsstaaten:
**CH DE FR GB IT LI NL**

(56) Entgegenhaltungen:
**DE-A-2 343 724**
**FR-A-371 719**
**GB-A-680 045**

(73) Patentinhaber: **MAN GUTEHOFFNUNGSHÜTTE GMBH, Bahnhofstrasse, 66 Postfach 11 02 40, D-4200 Oberhausen 11 (DE)**

(72) Erfinder: **Kotzur, Joachim, Dr.- Ing., Holtkampstrasse 18, D-4200 Oberhausen 11 (DE)**

EP 0 102 461 B1

## Beschreibung

Die Erfindung betrifft eine Sperrflüssigkeitsdichtung zum Abdichten der zwischen einem Hochdruckbereich und einem Niederdruckbereich liegenden Durchführung einer Welle mit Zuführbohrungen für unter geringfügig höherem Druck zugeführter Sperrflüssigkeit als der Druck im Hochdruckbereich ist sowie sich beiderseits dieser Zuführbohrungen erstreckenden Teildichtungsspalten und einer sich hochdruckseitig an einen Teilspalt anschließenden, mit einem Schwimmringkörper zusammenwirkenden Fliehkraftdichtung.

Eine Sperrflüssigkeitsdichtung der vorgenannten Art ist aus der DE-PA-2 153 560 bekannt. Bei dieser Sperrflüssigkeitsdichtung ist zwischen der Zuführbohrung für die Sperrflüssigkeit und dem hochdruckseitigen Dichtspalt eine ringförmige, den Sperrflüssigkeitsdruck durch Fliehkraftwirkung erhöhende Pumpkammer vorgesehen und der konstante Druck der zugeführten Sperrflüssigkeit nur geringfügig höher als der Druck im Hochdruckbereich. In Verbindung mit einer am verfahrensseitigen Ende des hochdruckseitigen Dichtspalts angeordneten Kammer wird erreicht, daß bei allen Drehzahlen eine Kompensation der Pumpwirkungen der Pumpkammern beiderseits des hochdruckseitigen Dichtspalts auftritt, so daß durch die Pumpwirkung im hochdruckseitigen Dichtspalt ein wesentlich höherer Flüssigkeitsdruck als der Arbeitsgasdruck aufrechterhalten wird. Bei Stillstand der Maschine bewirkt der höhere Druck, daß einerseits kein Arbeitsmedium in die Dichtung eindringt und andererseits nur eine kleine Menge Sperrflüssigkeit in den Hochdruckbereich abfließt.

Nachteilig ist bei dieser Anordnung, daß im hochdruckseitigen Teildichtspalt die Sperrflüssigkeit annähernd stagniert, so daß die gesamte, in diesem Teildichtspalt und der hochdruckseitig anschließenden Fliehkraftdichtung erzeugte Reibungswärme indirekt über die Gehäusebauteile und die Wellenbüchse abgeführt werden muß. Bei hohen Umfangsgeschwindigkeiten im Dichtspalt und engen Dichtspalten zur Erzielung geringer Stillstandsleckagen ist das nicht ausreichend. Außerdem wird während des Normalbetriebes die hochdruckseitige Stirnfläche der das umlaufende Flügelrad umgebenden Doppelbuchse von dem in der Pumpkammer herrschenden höheren Druck beaufschlagt, wodurch axiale Druckkräfte auf die Gehäusestirnwand entstehen, was bei schwimmend angeordneter Doppelbuchse nachteilig ist.

Die Aufgabe der Erfindung besteht darin, die bekannte Sperrflüssigkeitsdichtung derart weiterzubilden, daß ein Teil der entstehenden Reibungswärme unmittelbar vom Ort ihrer Entstehung mit der Sperrflüssigkeit abgeführt wird, wobei der Vorteil extrem kleiner Leckagen im Hochdruckbereich bei allen Drehzahlen und im Stillstand aufrechterhalten bleiben soll.

Die Lösung der Aufgabe besteht erfindungsgemäß darin, daß die Fliehkraftdichtung beidseitig mit sich axial erstreckenden ringförmigen Verbreiterungen versehen ist und auf kleinerem Radius am Umfang verteilt beidseitig strömungsführende Kanäle angeordnet sind und in dem Schwimmring auf der der Sperrmittelzufuhr zugewandten Seite der Fliehkraftdichtung auf einem dem hochdruckseitigen Dichtspalt nahen Radius sich Kanäle befinden, die über Rückschlagventile mit einer Verteilungskammer verbunden sind.

Nach einer Ausgestaltung der Erfindung können die strömungsführenden Kanäle als mit der Fliehkraftdichtungsscheibe umlaufende, an die Strömungsverhältnisse beiderseits der Scheibe angepaßte Schaufelgitter ausgebildet sein. Die strömungsführenden Kanäle bzw. Schaufelgitter bewirken eine Druckerhöhung der über den hochdruckseitigen Dichtspalt zugeführten Sperrflüssigkeit, die durch die Kanäle im Schwimmringkörper über die Rückschlagventile, welche ab einer zur dynamischen Druckerhöhung erforderlichen Drehzahl öffnen, in die Verteilungskammer zurückgeführt wird und sich hier mit dem von außen einströmenden Sperrflüssigkeitsstrom vermischt. Dadurch wird die im hochdruckseitigen Dichtspalt entstehende Wärme mit der sogenannten Überlauf-Sperrflüssigkeit und der über den niederdruckseitigen Teilspalt fließenden Sperrflüssigkeit abgeführt.

Die axialen ringförmigen Verbreiterungen der Fliehkraftdichtung schirmen den inneren Teil mit der zirkulierenden Strömung vom äußeren Bereich der Fliehkraftdichtung ab, in dem die Sperrflüssigkeit einen Druck erhält, der deutlich über dem Sperrflüssigkeitszuführdruck und dem hochdruckseitigen Gasdruck während des Normalbetriebes liegt.

Vorzugsweise sind die Kanäle im Schwimmringkörper als eine axial verlaufende Eindrehung mit am inneren Ende befindlichen, radial verlaufenden Bohrungen ausgebildet, wobei die Eindrehung einen äußeren Durchmesser aufweist, der etwa gleich dem inneren Durchmesser der ringförmigen Verbreiterungen an der Fliehkraftdichtung ist. Nach einer Ausgestaltung der Erfindung ist vorgesehen, daß der innere Durchmesser der Eindrehung mit dem hochdruckseitigen Ende im Querschnitt ein L-förmiges Profil bildet. Damit wird eine zusätzliche Sicherheit gegen Anstreifen an der Wellenbüchse erreicht, da sich der L-förmige Teil bei Erwärmung durch ihn konzentrisch umschließende Bauteile von der Welle weg ausdehnen kann.

Die durch den Umlauf der Sperrflüssigkeit im Schwimmringkörper erzielte bessere Kühlwirkung ermöglicht, daß der hochdruckseitige Dichtspalt mit kleinerer Spaltweite als der niederdruckseitige Dichtspalt ausgeführt werden kann, was insbesondere im Stillstand bei gleicher Druckdifferenz von Sperrflüssigkeitszuführdruck zum hochdruckseitigen Gasdruck zu geringeren Innenleckagen führt.

Zur Erzielung einer optimalen, d. h. konzentrischen Lage der Schwimmringe zur Welle bzw. Wellenbüchse muß sich der Schwimmringkörper frei von axialen Druckkräften radial einstellen können. Das kann nach einer Ausgestaltung der Erfindung erreicht werden, wenn der Schwimmringkörper die umlaufende Fliehkraftdichtung beidseitig umschließt. Dabei heben sich die durch Pumpwirkung beidseitig der umlaufenden Fliehkraftdichtung entstehenden Druckanstiege im Schwimmringkörper gegenseitig auf. Die äußeren Druckkräfte auf den Schwimmringkörper werden durch die nur von den statischen Gas- und Sperrflüssigkeitsdrücken abhängigen und dementsprechend gewählter Anordnung der statischen Dichtringe (O-Ringe) axial beidseitig des Schwimmringkörpers zum umschließenden Gehäuse kompensiert.

Eine weitere vorteilhafte Ausführung ist dadurch gekennzeichnet, daß die über Rückschlagventile rückgeförderte Sperrflüssigkeit vor Wiedereinleiten in den Sperrflüssigkeitszuführstrom über Entgaser und/oder Kühler geleitet wird.

Die Erfindung wird nachfolgend als Ausführungsbeispiel an Hand der Zeichnung näher beschrieben.

Es zeigen:

Fig. 1 eine Sperrflüssigkeitsdichtung im Schnitt
Fig. 2 ein Schema der Druckverteilung bei Betriebsdrehzahl
Fig. 2a ein Schema der Druckverteilung im Stillstand
Fig. 3 eine Sperrflüssigkeitsdichtung mit Entgaser und Kühler in der Rückführleitung.

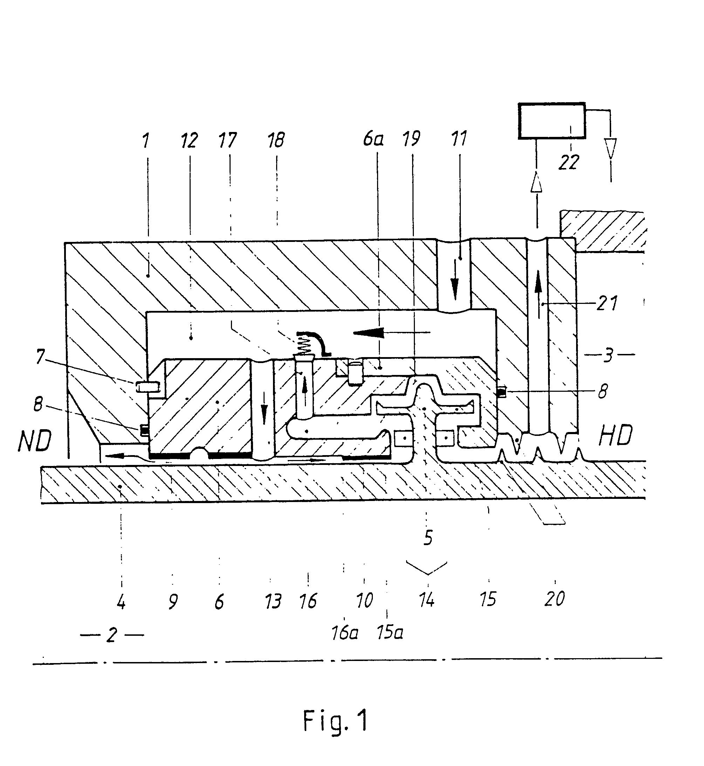

Nach Fig. 1 ist in einem Maschinengehäuse 1 die Sperrflüssigkeitsdichtung zum Abdichten der Durchführung der Welle 2 gegen in Raum 3 unter Druck stehendem Gas angeordnet. Mit der umlaufenden Welle 2 ist eine Wellenbuchse 4 mit einer Fliehkraftdichtung 5 starr verbunden. Ein im Gehäuse angeordneter geteilter Schwimmringkörper 6, 6a, umschließt die Fliehkraftdichtung 5 beidseitig. Haltestifte 7 verhindern eine Rotation des Schwimmringkörpers 6, 6a, ohne seine radiale Einstellbarkeit zu behindern. O-Ringe 8 sind so angeordnet, daß die axialen Sperrflüssigkeits- und Gaskräfte am Schwimmringkörper kompensiert werden. Die Wellenbüchse und der Schwimmringkörper 6, 6a, legen die ringförmigen Dichtungsspalten 9 und 10 fest. Das Gehäuse 1 besitzt für die Zuführung der Sperrflüssigkeit eine Bohrung 11, die in eine Verteilungskammer 12 einmündet. Im Schwimmringkörper 6 angeordnete Bohrungen 13 führen zu dem der Niederdruckseite zugewandten Teildichtspalt 9 und dem hochdruckseitigen, engeren Teildichtspalt 10. Die Fliehkraftdichtungsscheibe 5 ist beiderseits mit strömungsführenden Kanälen 14 und mit sich axial erstreckenden ringförmigen Verbreiterungen 15 versehen. Auf der vom Hochdruckbereich abgewandten Seite der Fliehkraftdichtung ist im Schwimmringkörper 6 eine Eindrehung 16 mit einem äußeren Durchmesser 16a vorhanden, an deren innerem Ende sich radiale Bohrungen 17 mit Rückschlagventilen 18 befinden. Die Fliehkraftdichtung 5 rotiert mit ihrem Außendurchmesser in der Kammer 19. Das Gehäuse 1 und die Wellendichtung 4 sind hochdruckseitig mit Labyrinthspitzen 20 versehen. Zwischen den Labyrinthspitzen im Gehäuse 1 befinden sich Ablaufbohrungen 21.

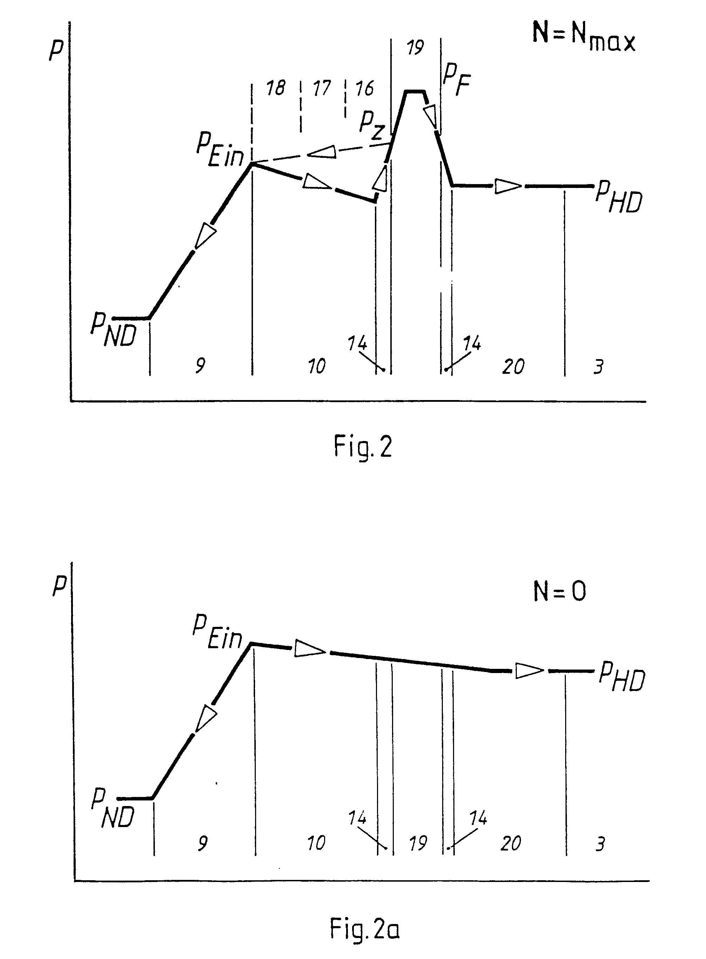

An Hand der in Fig. 2 dargestellten Druckverteilung wird der Strömungsverlauf innerhalb der Sperrflüssigkeitsdichtung beschrieben. Der Sperrflüssigkeitsstrom, der mit einem geringfügig höheren Druck $P_{EIN}$ als der hochdruckseitige Gasdruck $P_{HD}$ dem Gehäuse 1 durch die Bohrung 11 zugeführt wird und über die Verteilungskammer 12 in die Bohrungen 13 eintritt, teilt sich in zwei Dichtungsströme. Ein Teil fließt über den Teildichtspalt 9, wobei eine Entspannung auf den Niederdruck $P_{ND}$ - meist Atmosphärendruck - erfolgt. Der andere Teil strömt über den engeren Teildichtspalt 10 zur Hochdruckseite. Mit zunehmender Drehzahl der Welle 2 steigt der Druck in der beidseitig wirkenden Fliehkraftdichtung 5 auf den Außendruck an, der eine sichere Barriere gegen schwankende Gasdrücke $P_{HD}$ bildet. Bei Erreichen eines eingestellten zwischendruckes $P_Z$, der deutlich über dem Zuführdruck $P_{EIN}$ liegt, öffnen sich die Rückschlagventile 18 und es wird Sperrflüssigkeit über den hochdruckseitigen, Teildichtspalt 10, die Eindrehung 16 und die radialen Bohrungen 17 zurück in die Verteilungskammer 12 geführt, in der eine Vermischung mit der frisch zugeführten Sperrflüssigkeit erfolgt. Beiderseits der Flansche 15 wird Sperrflüssigkeit in die Kammer 19 gefördert, an deren Außendurchmesser der höchste Fliehkraftdruck $P_F$ entsteht. Bei geeigneter Wahl des Eintrittsdruckes $P_{EIN}$ bildet die gegeneinander geförderte Sperrflüssigkeit in der Kammer 19 einen Flüssigkeitsring. Ein Eindringen von Arbeitsgas von der Hochdruckseite in die Kammer 19 wird durch den Flüssigkeitsring mit dem Außendruck $P_F$ auch bei Entnahme der zirkulierenden Sperrflüssigkeit an der der Hochdruckseite abgewandten Seite der Fliehkraftdichtung auf einem kleineren Durchmesser als dem Außendurchmesser verhindert. Bei relativ niedriger Drehzahl und bei Stillstand der Maschine (Fig. 2a) sind die Rückschlagventile 18 geschlossen und verhindern so einen By-Pass-Strom von der Verteilungskammer 12 zur Hochdruckseite. Ein Abfluß der Sperrflüssigkeit zur Arbeitsgasseite hin wird von den Labyrinthspitzen 20 am Gehäuse 1 und an der Wellenbüchse 4 behindert, aber nicht vollstandig ausgeschlossen. Verbleibende Lecksperrflüssigkeit wird über Bohrungen 21 im Gehäuse 1 in einen mit dem Druckgas in Verbindung stehenden Kondenstopf 22 abgeführt und nach der Reinigung vom Gas wieder in den Sperrmittelkreislauf eingeführt.

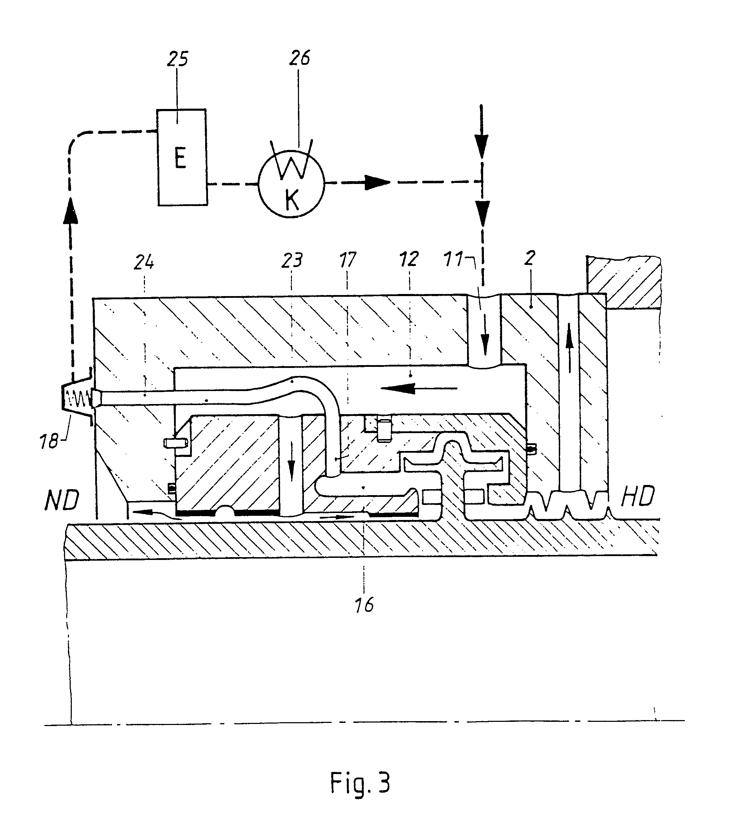

Bei einer vorteilhaften Ausführung der Sperrflüssigkeitsdichtung nach Fig. 3 kann ein zusätzlicher Schutz gegen das Eindringen von Arbeitsgas über die Rückschlagventile 18 in die Verteilungskammer 12 dadurch erreicht werden, daß die über die Bohrungen 17 abströmende Sperrflüssigkeit nicht unmittelbar in die Verteilungskammer 12 eingeleitet wird, sondern über elastische Leitungen 23 und im Gehäuse 1 angeordnete Bohrungen 24 nach außen abgeführt wird, von wo es über die jetzt hier angeordneten Rückschlagventile 18 über eine Entgasungseinheit 25 und einen Kühler 26 wieder dem Sperrflüssigkeitsstrom beigemischt wird.

## Patentansprüche

1. Sperrflüssigkeitsdichtung zum Abdichten der zwischen einem Hochdruckbereich und einem Niederdruckbereich liegenden Durchführung einer Welle mit Zuführbohrungen für unter geringfügig höherem Druck zugeführter Sperrflüssigkeit als der Druck im Hochdruckbereich ist sowie sich beiderseits dieser Zuführbohrungen erstreckenden Teildichtungsspalten und einer sich hochdruckseitig an einen Teilspalt (10) anschließenden, mit einem Schwimmringkörper (6, 6a) zusammenwirkenden Fliehkraftdichtung (5), dadurch gekennzeichnet, daß die Fliehkraftdichtung (5) beidseitig mit sich axial erstreckenden ringförmigen Verbreiterungen (15) versehen ist und auf kleinerem Radius am Umfang verteilt beidseitig strömungsführende Kanäle (14) angeordnet sind und in dem Schwimmringkörper (6, 6a) auf der der Sperrmittelzufuhr zugewandten Seite der Fliehkraftdichtung (5) auf einem dem hochdruckseitigen Dichtspalt (10) nahen Radius sich Kanäle (16, 17) befinden, die über Rückschlagventile (18) mit einer Verteilungskammer (12) verbunden sind.

2. Sperrflüssigkeitsdichtung nach Anspruch 1, dadurch gekennzeichnet, daß die strömungsführenden Kanäle (14) als mit der Fliehkraftdichtungsscheibe umlaufende, an die Strömungsverhältnisse beiderseits der Scheibe angepaßte Schaufelgitter ausgebildet sind.

3. Sperrflüssigkeitdichtung nach den Anspruch 1, dadurch gekennzeichnet, daß die Kanäle im Schwimmringkörper (6) als eine axial verlaufende Eindrehung (16) mit am inneren Ende befindlichen radial verlaufenden Bohrungen (17) ausgebildet sind und die Eindrehung (16) einen äußeren Durchmesser (16a) aufweist, der etwa gleich dem inneren Durchmesser (15a) der ringförmigen Verbreiterungen (15) ist.

4. Sperrflüssigkeitsdichtung nach Anspruch 3, dadurch gekennzeichnet, daß der innere Durchmesser der Eindrehung (16) mit dem hochdruckseitigen Ende im Querschnitt ein L-förmiges Profil bildet.

5. Sperrflüssigkeitsdichtung nach den Ansprüchen 1 bis 4, dadurch gekennzeichnet, daß der hochdruckseitige Dichtspalt (10) mit kleinerer Spaltweite als der niederdruckseitige Dichtspalt (9) ausgeführt ist.

6. Sperrflüssigkeitsdichtung nach den Ansprüchen 1 bis 5, dadurch gekennzeichnet, daß der Schwimmringkörper (6, 6a) die umlaufende Fliehkraftdichtung (5) beidseitig umschließt.

7. Sperrflüssigkeitsdichtung nach den Ansprüchen 1 bis 6, dadurch gekennzeichnet, daß die über Rückschlagventil (18) rückgeförderte Sperrflüssigkeit vor Wiedereinleiten in den Sperrflüssigkeitszuführstrom über Entgaser (25) und/oder Kühler (26) geleitet wird.

## Claims

1. Packing-fluid seal for the sealing-off of the bushing, lying between a high-pressure region and a low-pressure region, of a shaft, having feed bores for packing fluid fed under slightly higher pressure than the pressure is in the high-pressure region as well as partial sealing gaps, extending on both sides of these feed bores, and a centrifugal seal (5), adjoining a partial gap (10) on the high-pressure side and interacting with a floating ring element (6, 6a) characterized in that the centrifugal seal (5) is provided on both sides with axially extending annular widened portions (15) and, on the smaller radius, distributed around the periphery, there are flow-conducting channels (14) arranged on both sides and, in the floating ring element (6, 6a) on the side of the centrifugal seal (5) facing the packing medium feed there are, on a radius close to the sealing gap (10) on the high-pressure side, channels (16, 17) which are connected via non-return valves (18) to a distribution chamber (12).

2. Packing-fluid seal according to Claim 1, characterized in that the flow-conducting channels (14) are designed as cascades which rotate with the centrifugal seal disc and are adapted to the flow conditions on both sides of the disc.

3. Packing-fluid seal according to Claim 1, characterized in that the channels in the floating ring element (6) are designed as an axially running turned groove (16) with radially running bores (17) at the inner end and the turned groove (16) has an outside diameter (16a) which is approximately equal to the inside diameter (15a) of the annular widened portions (15).

4. Packing-fluid seal according to Claim 3, characterized in that the inside diameter of the turned groove (16) forms an L-shaped profile in cross-section with the end on the high pressure side.

5. Packing-fluid seal according to Claims 1 to 4, characterized in that the sealing gap (10) on the high pressure side is made with a smaller gap width than the sealing gap (9) on the low pressure side.

6. Packing-fluid seal according to Claims 1 to 5, characterized in that the floating ring element (6, 6a) encloses the rotating centrifugal seal (5) on both sides.

7. Packing-fluid seal according to Claims 1 to 6, characterized in that the packing fluid returned via non-return valve (18) is passed via degasser (25) and/or cooler (26) before reintroduction into the packing-fluid feed flow.

**Revendications**

1. Joint d'étanchéité à liquide d'étanchement, pour étancher le passage d'un arbre entre une zone à haute pression et une zone à basse pression, avec des perçages d'alimentation pour du liquide d'étanchement alimenté sous une pression légèrement plus élevée que la pression dans la zone à haute pression, ainsi qu'avec des interstices d'étanchéité partiels s'étendant des deux côtés de ces perçages d'alimentation, et avec une garniture d'étanchéité (5) à force centrifuge, se raccordant côté haute pression à un interstice partiel (10) et coopérant avec un corps annulaire flottant (6, 6a), joint d'étanchéité caractérisé en ce que la garniture d'étanchéité à force centrifuge (5) est munie des deux côtés d'élargissements annulaires (15) s'étendant axialement, tandis que des canaux d'écoulement (14) sont disposés des deux côtés, répartis à la périphérie sur un plus petit rayon, et dans le corps flottant (6, 6a), sur le côté tourné vers l'alimentation en liquide d'étanchement de la garniture d'étanchéité à force centrifuge (5), sur un rayon voisin de l'interstice d'étanchéité (10) côté haute pression, se trouvent des canaux (16, 17) qui sont reliés par l'intermédiaire de soupapes anti-retour (18) à une chambre de répartition (12).

2. Joint d'étanchéité à liquide d'étanchement selon la revendication 1, caractérisé en ce que les canaux d'écoulement (14) revêtent la forme d'une grille d'aubes adaptée aux conditions d'écoulement des deux côtés du disque de la garniture d'étanchéité à force centrifuge et tournent avec ce disque.

3. Joint d'étanchéité à liquide d'étanchement selon la revendication 1, caractérisé en ce que les canaux dans le corps flottant (6) revêtent la forme d'une gorge (16) tournée dans la masse et comportant à son extrémité interne des perçages (17) s'étendant radialement, et cette gorge (16) tournée dans la masse a un diamètre externe qui est à peu près égal au diamètre interne (15a) des élargissements annulaires (15).

4. Joint d'étanchéité à liquide d'étanchement selon la revendication 3, caractérisé en ce que le diamètre interne de la gorge (16) tournée dans la masse forme, en section transversale, un profil en L avec l'extrémité côté haute pression.

5. Joint d'étanchéité à liquide d'étanchement selon les revendications 1 à 4, caractérisé en ce que l'interstice d'étanchéité (10) côté haute pression est réalisé avec une largeur d'interstice plus petite que l'interstice d'étanchéité (9) côté basse pression.

6. Joint d'étanchéité à liquide d'étanchement selon les revendications 1 à 5, caractérisé en ce que le corps annulaire flottant (6, 6a) entoure des deux côtés la garniture d'étanchéité tournante (5) à force centrifuge.

7. Joint d'étanchéité à liquide d'étanchement selon les revendications 1 à 6, caractérisé en ce que le liquide d'étanchement refoulé par l'intermédiaire de la soupape de retenue (18) passe par l'intermédiaire d'un dégazeur (25) et/ou d'un refroidisseur (26) avant sa réinsertion dans le courant d'alimentation en liquide d'étanchement.

Fig. 1

Fig. 2

Fig. 2a

3

Fig. 3